# EUROPEAN PATENT SPECIFICATION

(11) **EP 3 848 837 B1**
(45) Date of publication and mention of the grant of the patent: **23.04.2025**
(21) Application number: 18939551.0
(22) Date of filing: 07.11.2018
(51) Int. Cl.: G06F 21/60, G06F 21/74

(54) **STORAGE CONTROLLER AND FILE PROCESSING METHOD, APPARATUS, AND SYSTEM**
SPEICHERSTEUERUNG UND DATEIVERARBEITUNGSVERFAHREN, VORRICHTUNG UND SYSTEM
CONTRÔLEUR DE STOCKAGE ET PROCÉDÉ DE TRAITEMENT DE FICHIERS, APPAREIL, ET SYSTÈME

(43) Date of publication of application: 14.07.2021
(73) Proprietor: HUAWEI TECHNOLOGIES CO., LTD., Shenzhen, Guangdong 518129 (CN)
(72) Inventor: PAN, Shilin, Shenzhen, Guangdong 518129 (CN)
(74) Representative: Maiwald GmbH
(86) International application number: PCT/CN2018/114445
(87) International publication number: WO 2020/093290

(56) References cited:
- CN-A- 105 812 332
- CN-A- 105 825 135
- CN-A- 106 997 439
- CN-A- 107 533 514
- CN-A- 107 590 402
- CN-A- 108 259 162
- CN-A- 108 369 626
- US-A- 4 238 854
- US-A1- 2017 337 390

## Description

### TECHNICAL FIELD

This application relates to the field of file storage control technologies, and in particular, to a storage controller, and a file processing method, apparatus, and system.

### BACKGROUND

Currently, a file encryption solution is usually used to store a file in a mainstream electronic device storage system. A common file encryption solution is a per file per key (per file per key) encryption solution. Different files are encrypted by using different keys and stored in a memory. In addition, the key for encrypting the file may also be encrypted by another key. For example, a key A is used to encrypt a file, and another key a is used to encrypt the key A. The key a may be referred to as a classkey.

Encrypted storage of the file needs to be implemented by using a processor, a storage controller, and a memory of an electronic device. A running mode of the processor includes a rich execution environment (REE) mode and a trusted execution environment (TEE) mode. To ensure system security, only a processor in the TEE mode can obtain and use the classkey. When writing a file, the processor needs to first switch to the TEE mode, encrypt, by using the classkey, the key A configured for the file to obtain a ciphertext B, and configure the key A in the storage controller. Then, the processor switches to the REE mode, and then sends an instruction to the storage controller to instruct the storage controller to encrypt the file by using the key A and store the encrypted file and the ciphertext B in the memory.

During file reading, the processor in the REE mode needs to first obtain the ciphertext B from the memory through the storage controller, and switch to the TEE mode. The processor in the TEE mode uses the classkey to decrypt the ciphertext B to obtain the key A, and configures the key A in the storage controller. Then, the processor switches to the REE mode, and then sends an instruction to the storage controller to instruct the storage controller to obtain the to-be-read file from the memory, and decrypts the obtained file by using the key A, to obtain the decrypted file.

However, in a process of using the electronic device, a large quantity of files usually need to be read and written. Consequently, the processor needs to frequently switch from the REE mode to the TEE mode, encrypt the key A by using the classkey, or decrypt the ciphertext B by using the classkey, and then switch from the TEE mode to the REE mode.

Repeated switching between the REE mode and the TEE mode occupies a relatively large quantity of processing resources of the processor, and affects efficiency of processing another task by the processor. Consequently, processing performance of the processor is affected to some extent.

Chinese patent application CN 105812332 A discloses a data protection method comprising the steps that a client application receives to-be-encrypted data transmitted by a a mobile equipment or a third application, and transmits the to-be-encrypted to a trustable application. The trustable application is used for the encryption of the to-be-encrypted data through employing a secret key stored in a trustable storage of a trustable execution environment, and enables the encrypted data to be transmitted to the client application. The client application enables the encrypted data to be transmitted to the corresponding mobile equipment or third side application.

Chinese patent application CN 106997439 A discloses data encryption and decryption methods comprising class keys that are decrypted according to a main key pre-stored in a trusted execution environment by a trusted application. United States patent application 2017/0337390 A1 discloses a further method for protecting information stored on a computing device. US patent document US4238854A constitutes relevant prio art.

### SUMMARY

This application provides a storage controller, and a file processing method, apparatus, and system, to improve file processing efficiency while ensuring security.

According to a first aspect, the embodiments of this application provide a storage controller, including: a controller, a keystore, a key generator, a file cryptography device, and a data memory interface. The keystore is configured to store at least one classkey. The controller is configured to: receive indication information of a to-be-processed file and indication information of a random number that are sent by a processor; then, obtain the to-be-processed file based on the indication information of the to-be-processed file; obtain the random number based on the indication information of the random number; and obtain a first classkey from the at least one classkey stored in the keystore. The key generator is configured to calculate a file key based on the random number and the first classkey that are obtained by the controller. The file cryptography device is configured to process the to-be-processed file by using the file key calculated by the key generator to obtain a processed file. The data memory interface is configured to write the processed file into a data memory, or read the to-be-processed file from the data memory.

In the storage controller provided in the foregoing solution, the keystore stores at least one classkey, and the key generator may generate the file key based on the first classkey in the at least one classkey and the random number provided by the processor. In this way, the storage controller may automatically generate, based on the random number provided by the processor, the file key used for file encryption or decryption processing. The processor does not need to switch to a TEE mode for processing when reading or writing a file. This helps reduce a performance loss caused to the processor by reading or writing the encrypted file on a premise of ensuring security, and improves processing efficiency.

Based on the first aspect, in a possible implementation, when processing the to-be-processed file by using the file key calculated by the key generator to obtain a processed file, the file cryptography device may be specifically configured to encrypt the to-be-processed file by using the file key to obtain the processed file. The data memory interface is specifically configured to write the processed file into the data memory.

Based on the first aspect, in a possible implementation, the indication information of the to-be-processed file includes address information of the to-be-processed file in a runtime memory. When obtaining the to-be-processed file based on the indication information of the to-be-processed file, the controller is specifically configured to read the to-be-processed file from the runtime memory through a system interface based on the address information.

Based on the first aspect, in a possible implementation, when processing the to-be-processed file by using the file key, the file cryptography device is specifically configured to encrypt the to-be-processed file by using the file key to obtain the processed file. The data memory interface is specifically configured to read the to-be-processed file from the data memory.

Based on the first aspect, in a possible implementation, the indication information of the to-be-processed file includes address information of the to-be-processed file in the data memory. When obtaining the to-be-processed file based on the indication information of the to-be-processed file, the controller is specifically configured to control the data memory interface to read the to-be-processed file from the data memory based on the address information.

Based on the first aspect, in a possible implementation, the indication information of the random number includes the random number. When obtaining the random number based on the indication information of the random number, the controller is specifically configured to obtain the random number included in the indication information of the random number.

Based on the first aspect, in a possible implementation, the indication information of the random number includes address information of the random number in the runtime memory. When obtaining the random number based on the indication information of the random number, the controller is specifically configured to read the random number from the runtime memory through the system interface based on the address information.

Based on the first aspect, in a possible implementation, the indication information of the random number is determined by the processor based on the random number in the runtime memory. Before receiving the indication information of the to-be-processed file and the indication information of the random number that are sent by the processor, the controller is further configured to: receive second indication information sent by the processor; control, based on the second indication information, the data memory interface to read metadata of the to-be-processed file from the data memory; and write the to-be-processed file into the runtime memory through the system interface, where the metadata of the to-be-processed file includes the random number.

Based on the first aspect, in a possible implementation, the controller is further configured to: receive first indication information sent by the processor; and control, based on the first indication information, the data memory interface to write the random number into the data memory as metadata of the to-be-processed file.

Based on the first aspect, in a possible implementation, when obtaining the first classkey from the at least one classkey stored in the keystore, the controller is specifically configured to: receive indication information of the first classkey sent by the processor, where the indication information of the first classkey is used to indicate a storage location of the first classkey in the keystore; and obtain the first classkey from the keystore based on the indication information of the first classkey.

According to a second aspect, the embodiments of this application provide a file processing method, including: receiving, by a storage controller, indication information of a to-be-processed file and indication information of a random number that are sent by a processor; then, obtaining, by the storage controller, the to-be-processed file based on the indication information of the to-be-processed file, obtaining the random number based on the indication information of the random number, and obtaining a first classkey from at least one pre-stored classkey; calculating, by the storage controller, a file key based on the obtained random number and the first classkey; and then, processing, by the storage controller, the to-be-processed file by using the calculated file key to obtain a processed file.

Based on the second aspect, in a possible implementation, the indication information of the to-be-processed file includes address information of the to-be-processed file in a runtime memory. When obtaining the to-be-processed file based on the indication information of the to-be-processed file, the storage controller may read the to-be-processed file from the runtime memory based on the address information.

Based on the second aspect, in a possible implementation, when processing the to-be-processed file by using the file key to obtain a processed file, the storage controller may decrypt the to-be-processed file by using the file key to obtain the processed file. When obtaining the to-be-processed file based on the indication information of the to-be-processed file, the storage controller may read the to-be-processed file from a data memory based on the indication information of the to-be-processed file.

Based on the second aspect, in a possible implementation, the indication information of the to-be-processed file includes address information of the to-be-processed file in the data memory. When reading the to-be-processed file from the data memory, the storage controller may read the to-be-processed file from the data memory based on the address information.

Based on the second aspect, in a possible implementation, the indication information of the random number includes the random number. When obtaining the random number based on the indication information of the random number, the storage controller may obtain the random number from the indication information of the random number.

Based on the second aspect, in a possible implementation, the indication information of the random number includes address information of the random number in the runtime memory. When obtaining the random number based on the indication information of the random number, the storage controller may read the random number from the runtime memory based on the address information.

Based on the second aspect, in a possible implementation, the indication information of the random number is determined by the processor based on the random number in the runtime memory. Before receiving the indication information of the to-be-processed file and the indication information of the random number that are sent by the processor, the storage controller may further receive second indication information sent by the processor; read metadata of the to-be-processed file from the data memory based on the second indication information; and write the to-be-processed file into the runtime memory, where the metadata of the to-be-processed file includes the random number.

Based on the second aspect, in a possible implementation, the storage controller may further receive first indication information sent by the processor; and control, based on the first indication information, the data memory interface to write the random number into the data memory as metadata of the to-be-processed file.

Based on the second aspect, in a possible implementation, when obtaining the first classkey from at least one pre-stored classkey, the storage controller may receive indication information of the first classkey sent by the processor. The indication information of the first classkey is used to indicate a storage location of the first classkey. The storage controller obtains the first classkey from the at least one pre-stored classkey based on the indication information of the first classkey.

According to a third aspect, the embodiments of this application provide a file processing apparatus, including a processor and the storage controller according to any one of the first aspect. The processor is configured to send indication information of a to-be-processed file and indication information of a random number to the storage controller.

Based on the third aspect, in a possible implementation, before sending the indication information of the to-be-processed file and the indication information of the random number to the storage controller, the processor is further configured to generate the random number for the to-be-processed file. After generating the random number for the to-be-processed file, the processor is further configured to send first indication information to the storage controller. The first indication information is used to indicate the storage controller to write the random number into a data memory as metadata of the to-be-processed file.

Based on the third aspect, in a possible implementation, before sending the indication information of the to-be-processed file and the indication information of the random number to the storage controller, the processor is further configured to: send second indication information to the storage controller, where the second indication information is used to indicate the storage controller to write metadata of the to-be-processed file into a runtime memory; query the runtime memory; and determine the random number from the metadata of the to-be-processed file.

Based on the third aspect, in a possible implementation, the apparatus further includes a memory controller corresponding to a runtime memory. The memory controller is connected to the storage controller through a system interface. The memory controller is configured to: read the to-be-processed file from the runtime memory, and send the to-be-processed file to the storage controller through the system interface; or receive a processed file from the storage controller through the system interface, and write the processed file into the runtime memory.

According to a fourth aspect, the embodiments of this application provide a file processing system, including the file processing apparatus according to any one of the third aspect and a data memory. The data memory is connected to a storage controller in the file processing apparatus.

### BRIEF DESCRIPTION OF DRAWINGS

FIG. 1 is a schematic architectural diagram of a file processing system according to an embodiment of this application;
FIG. 2 is a schematic diagram of a process in which a processor stores a classkey in a keystore according to an embodiment of this application;
FIG. 3 is a schematic flowchart 1 of a file writing method according to an embodiment of this application;
FIG. 4 shows a process of encrypting/decrypting a data block based on an initial vector according to an embodiment of this application; and
FIG. 5 is a schematic flowchart 2 of a file writing method according to an embodiment of this application.

### DESCRIPTION OF EMBODIMENTS

The following further describes the present invention in detail with reference to the accompanying drawings.

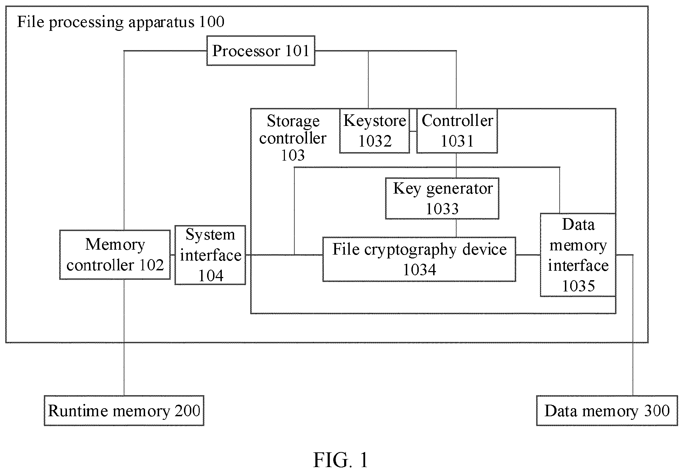

FIG. 1 is a schematic architectural diagram of a file processing system according to the embodiments of this application. The file processing system is located in an electronic device, and the electronic device includes but is not limited to a terminal or a server. The terminal includes but is not limited to a mobile phone, a laptop computer, a tablet computer, a desktop computer, or a wearable device. As shown in FIG. 1, the file processing system includes a file processing apparatus 100, a runtime memory 200, and a data memory 300. The file processing apparatus 100 is connected to the runtime memory 200 and the data memory 300. It should be noted that, unless otherwise specified, the term "connection" in the embodiments of this application is used to indicate an electrical connection, including but not limited to a direct connection through a wire and an indirect connection through a third-party component.

In the embodiments of this application, the runtime memory 200 may be a volatile memory, for example, may be a dynamic random access memory (DRAM), is usually used as a system memory, and is mainly used by the file processing apparatus 100 to quickly read data from the runtime memory 200 or write data into the runtime memory 200. The data memory 300 may be a non-volatile memory, such as a universal flash storage (UFS), an embedded multimedia card (eMMC), or a non-volatile memory express (NVMe) storage.

In the embodiments of this application, the file processing apparatus 100 may be a system on chip (SOC) or a system including a plurality of chips. As shown in FIG. 1, the file processing apparatus 100 includes a processor 101, a memory controller 102, and a storage controller 103. The processor 101 is connected to the memory controller 102 and the storage controller 103. The memory controller 102 is connected to the runtime memory 200, and the storage controller 103 is connected to the data memory 300. In a possible implementation, the memory controller 102 and the storage controller 103 may be further connected through a system interface 104. The processor 101 may control the storage controller 103 to read a file from the data memory 300, and send the read file to the memory controller 102 through the system interface 104, so that the memory controller 102 writes the file into the runtime memory 200. The processor 101 may further control the storage controller 103 to obtain, from the memory controller 102 through the system interface 104, a to-be-written file in the runtime memory 200, and write the to-be-written file into the data memory 300. For example, the system interface 104 is a system bus or another bus.

It may be understood that reading or writing a file in the runtime memory 200 needs to be implemented through the memory controller 102. For ease of description, in the embodiments of this application, expressions of "writing the file into the runtime memory 200" and "reading the file from the runtime memory 200" may include meanings of "writing the file into the runtime memory 200 through the memory controller 102" and "reading the file from the runtime memory 200 through the memory controller 102" respectively. Details are not described below again.

When the file read, from the data memory 300, by the storage controller 103 under control of the processor 101 is an encrypted stored file, the storage controller 103 further needs to decrypt the read file to obtain a decrypted file, and then write the decrypted file into the runtime memory 200. Similarly, when the file written, into the data memory 300, by the storage controller 103 under control of the processor 101 is a file that needs to be encrypted for storage, the storage controller 103 further needs to encrypt the to-be-written file to obtain an encrypted file, and then write the encrypted file into the data memory 300.

To resolve a problem that a performance loss is caused by switching a TEE mode of a processor for reading and writing an encrypted stored file in the prior art, the embodiments of this application provide a storage controller. When encrypting or decrypting a to-be-processed file, the storage controller may obtain a file key by using a pre-stored classkey, and encrypt or decrypt the to-be-processed file by using the obtained file key. In this way, the processor does not need to switch from an REE mode to the TEE mode, and a process of calculating the file key by using the classkey and configuring the file key in the storage controller can be saved. Therefore, processor resources occupied by reading and writing an encrypted stored file can be reduced, thereby helping improve file processing efficiency on a premise of ensuring security.

Based on the foregoing concept, the embodiments of this application provide a feasible storage controller structure, as shown in FIG. 1. The storage controller 103 includes a controller 1031, a keystore 1032, a key generator 1033, a file cryptography device 1034, and a data memory interface 1035. The keystore 1032 is connected to the processor 101, and is configured to store at least one classkey. In the embodiments of this application, the at least one classkey stored in the keystore 1032 may be directly written into the keystore 1032 before the storage controller 103 is delivered from a factory, or may be pre-stored in the keystore 1032 by the processor 101. For example, in a file system initialization phase, for example, after a terminal device is restarted or a system setting is restored, the processor 101 obtains at least one classkey by using a key generation algorithm, and stores the obtained at least one classkey in the keystore 1032. A key generation process pertains to the prior art, and details are not described in this application.

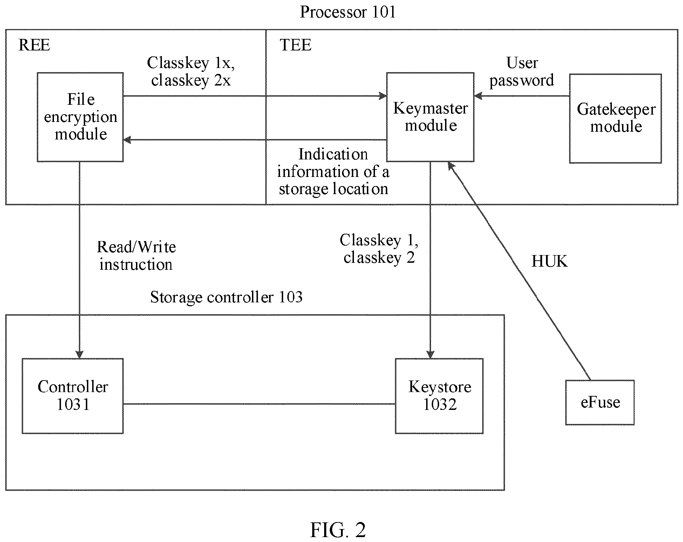

FIG. 2 shows an example of a process in which the processor 101 stores the classkey in the keystore 1032 by using classkey 1 and classkey 2 as an example. As shown in FIG. 2, the processor 101 includes two modes: TEE and REE. In a file system initialization phase, the processor 101 is generally in the REE mode by default. In the REE mode, the processor 101 obtains, from the data memory 300 and/or another storage medium by running a file encryption module inside the processor 101, a ciphertext of the classkey 1, namely classkey 1x, and a ciphertext of the classkey 2, namely classkey 2x. Then, the processor 101 switches to the TEE mode, decrypts the classkey 1x and the classkey 2x by running a keymaster module, to obtain the classkey 1 and the classkey 2, and stores the obtained classkey 1 and classkey 2 in the keystore 1032.

Usually, different classkeys are used to encrypt or decrypt different file keys. For example, the classkey 1 is used to encrypt or decrypt a file key of a user file, and the ciphertext of the classkey 1, namely classkey 1x, is generated after the classkey 1 is encrypted by using a fixed parameter. For another example, the classkey 2 is used to encrypt or decrypt a file key of a system file, and the ciphertext of the classkey 2, namely classkey 2x, is generated after the classkey 2 is encrypted by using a hardware unique key (HUK) and a user password (for example, a personal identification number (pin)). Based on this, as shown in FIG. 2, when decrypting the classkey 2x to obtain the classkey 2, the processor 101 in the TEE mode further needs to obtain the user password by running a gatekeepermodule, and obtain the HUK from an efuse. The eFuse is a common component in SOC, and is usually burnt with a unique HUK of the SOC when the SOC is delivered from a factory.

In the embodiments of this application, after storing the classkey 1 and the classkey 2 in the keystore 1032, the processor 101 in the TEE mode may further write storage location information of the classkey 1 and the classkey 2 in the keystore 1032 and classkey identifiers into the runtime memory 200 correspondingly. For example, if the processor 101 in the TEE mode stores complete content of the classkey 1 in a storage location 1 of the keystore 1032, and stores complete content of the classkey 2 in a storage location 2 of the keystore 1032, the classkey 1 and indication information 1 of the storage location 1, and the classkey 2 and indication information 2 of the storage location 2 are correspondingly written into the runtime memory 200. The classkey 1 and the classkey 2 written into the runtime memory 200 are the classkey identifiers. Afterwards, the processor 101 may switch to the REE mode, and may still obtain, from the runtime memory 200, the storage location information corresponding to the classkey 1 and the classkey 2 in the keystore 1032.

After the foregoing configuration, the processor 101 in the REE mode may send a read/write instruction to the storage controller 103 by running the file encryption module, to read a file from the data memory 300 or write a file into the data memory 300. Based on the storage controller 103 shown in FIG. 1, the embodiments of this application provide the following three specific embodiments to further describe the storage controller 103 provided in the embodiments of this application.

### Embodiment 1

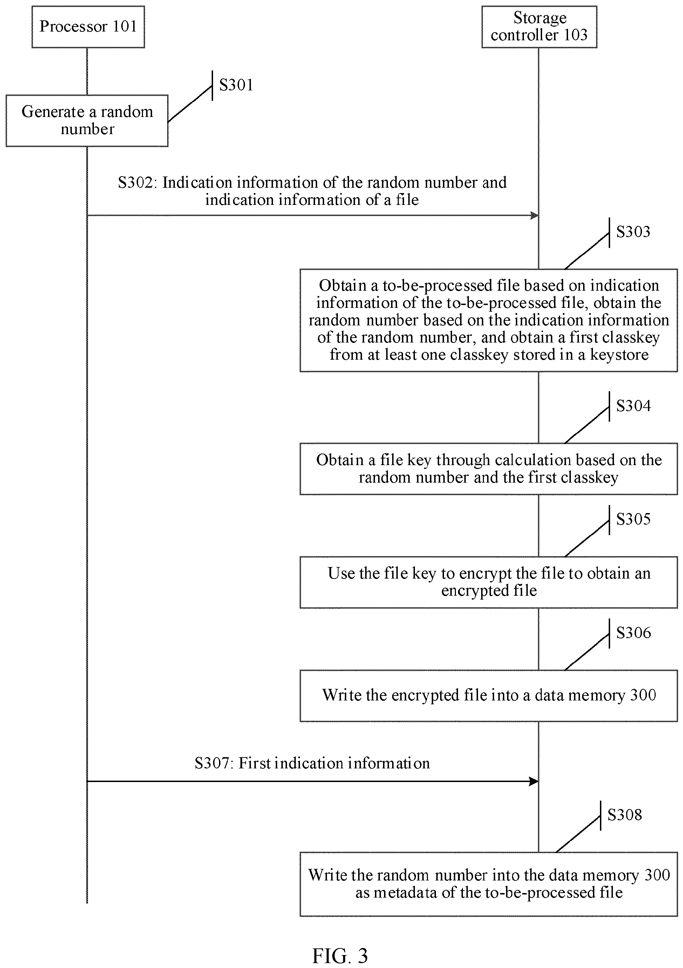

Assuming that a to-be-processed file A is a file generated by the processor 101 for the first time in the runtime memory 200, a procedure of encrypting and storing the file A in the data memory 300 may be shown in FIG. 3, and mainly includes the following steps: S301: The processor 101 generates a random number Ra for the file A. S302: The processor 101 sends indication information of the random number Ra and indication information of the file A to the storage controller 103. The indication information of the random number Ra may include not only the random number Ra, but also address information of the random number Ra in the runtime memory 200. The indication information of the file A may include address information of the file A in the runtime memory 200, for example, a start address of the file A and a data length of the file A. In a possible implementation, the keystore 1032 may store a plurality of classkeys. The processor 101 may further determine, based on a type of the file A, a classkey a corresponding to the file A, further determine indication information of the classkey a based on a pre-obtained correspondence between a classkey identifier and storage location information, and send the indication information of the classkey a to the storage controller 103.

S303: The controller 1031 in the storage controller 103 receives the indication information of the file A and the indication information of the random number Ra that are sent by the processor 101; obtains the file A based on the indication information of the file A; obtains the random number Ra based on the indication information of the random number Ra; and obtains the classkey a from at least one classkey stored in the keystore 1032. As shown in FIG. 1, the storage controller 103 may be connected to the runtime controller 102 through the system interface 104, so as to implement reading and writing in the runtime memory 200. In the embodiments of this application, after receiving the indication information of the file A, the controller 1031 may determine, based on the indication information of the file A, the address information of the file A in the runtime memory 200, and further obtain the file A from the runtime memory 200 through the system interface 104.

For the random number Ra, in a possible implementation, the indication information of the random number Ra includes the random number Ra, so that the controller 1031 may obtain the random number Ra from the indication information of the random number Ra. In another possible implementation, the indication information of the random number Ra includes the address information of the random number Ra in the runtime memory 200. After receiving the indication information of the random number Ra, the controller 1031 may determine, based on the indication information of the random number Ra, the address information of the random number Ra in the runtime memory 200, and further obtain the random number Ra from the runtime memory 200 through the system interface 104.

In a possible implementation of the embodiments of this application, the keystore 1032 may store only the classkey a, and the controller 1031 may obtain the classkey a in the keystore 1032 by default. In another possible implementation, the keystore 1032 may store a plurality of classkeys. The controller 1031 may receive the indication information that is of the classkey a and that is sent by the processor 101, determine, based on the indication information of the classkey a, a storage location of the classkey a in the keystore 1032, and further obtain the classkey a from the keystore 1032.

S304: The key generator 1033 calculates a file key RA based on the random number Ra and the classkey a. In the embodiments of this application, the key generator 1033 may calculate the file key RA based on a preset derivation model. The derivation model may be a key derivation function (KDF). It may be understood that when a requirement on encryption security is not high, a simpler derivation model may also be used to accelerate a processing speed. This is not limited in this application.

S305: The file cryptography device 1034 uses the file key RA to encrypt the file A, to obtain an encrypted file AX. S306: The data memory interface 1035 writes the file AX into the data memory 300. In a possible implementation, the processor 101 may further send destination address information of the file A in the data memory 300 to the storage controller 103. When writing the file AX into the data memory 300, the data memory interface 1035 may write, based on the destination address information of the file A in the data memory 300, the file AX into a location specified by the processor 101 in the data memory 300.

S307: The processor 101 sends first indication information to the controller 1031 in the storage controller 103. S308: The controller 1031 controls, based on the first indication information, the data memory interface 1035 to write the random number Ra into the data memory 300 as metadata of the file A.

Metadata is used to record file attribute information, such as file storage address information and a file format. In the embodiments of this application, the random number Ra generated by the processor 101 for the file A is also stored as the metadata of the file A. In a possible implementation, the processor 101 may construct a data block that includes all metadata of the file A, and send the first indication information to the controller 1031. The first indication information includes address information of the data block. The storage controller 103 obtains, based on the address information of the data block in the first indication information, the data block constructed by using all the metadata of the file A from the runtime memory 200 through the system interface 104, and stores the data block in the data memory 300. In a possible implementation, the controller 1031 also writes, based on the first indication information, the identifier of the classkey a allocated by the file A as metadata into the data memory 300.

For a file with a relatively large data amount, the processor 101 may usually perform block partition processing on the file in the runtime memory 200, and divide the file A into a plurality of data blocks. Therefore, in the embodiments of this application, the address information of the file A may also include address information of the plurality of data blocks into which the file A is divided, to be specific, a start address of each data block and a data length of each data block. The storage controller 103 may sequentially encrypt and store the plurality of data blocks based on the address information of the plurality of data blocks. This process is similar to the process shown in FIG. 3, and details are not described in this embodiment of this application. In a possible implementation, the processor 101 may further send an initial vector i corresponding to the file A and index information of the initial vector i to the storage controller 103, to improve security of file block encryption.

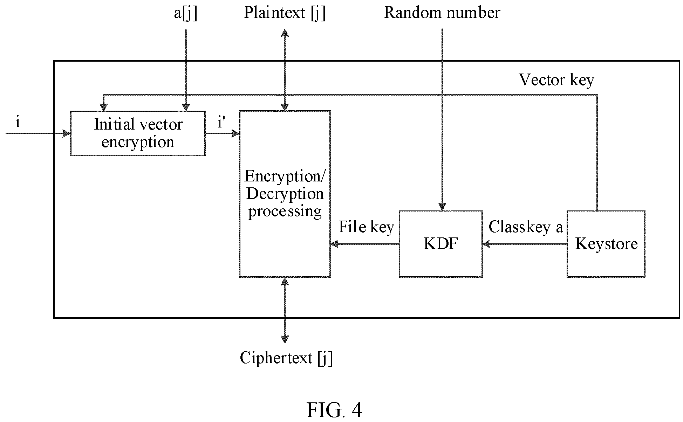

Based on the file block encryption, the embodiments of this application further provide a specific implementation of S305. With reference to FIG. 1, FIG. 4 shows a process in which a storage controller 103 performs block encryption processing on a file A based on an initial vector i according to the embodiments of this application. A plaintext [j] is any data block that needs to be encrypted and that is included in the file A. As shown in FIG. 4, the controller 1031 in the storage controller 103 obtains the initial vector i and index information of a vector key that are provided by the processor 101. The controller 1031 obtains, from the keystore 1032 based on the index information of the vector key, the vector key corresponding to the initial vector i, and encrypts the initial vector by using the vector key. According to an advanced encryption standard (AES), the controller 1031 may encrypt the initial vector i by using an AES encryption (AES-ENC) algorithm, and further process the encrypted initial vector i based on a[j], to obtain a processed initial vector i'. Herein, j is an address parameter determined based on the address information of the file A, a[j] is another parameter generated based on j. For specific implementation, refer to ciphertext stealing (CTS) adjustable encryption mode based on exclusive OR encryption (xor-encrypt-xor, XEX) of the AES (AES-XEX-ciphertext stealing, AES-XTS). Details are not described in the embodiments of this application.

In addition, the controller 1031 obtains a random number Ra based on indication information of the random number Ra, and obtains a classkey a from the keystore 1032. The key generator 1033 calculates a file key RA by using a KDF algorithm based on the random number Ra and the classkey a. The file cryptography device 1034 encrypts the plaintext [j] based on the file key RA and the processed initial vector i'. According to the AES, the file cryptography device 1034 may preliminarily encrypt the plaintext [j] by using the AES-ENC algorithm, and then further encrypt the preliminarily encrypted plaintext [j] based on the processed initial vector i', to obtain the ciphertext [j].

### Embodiment 2

During file reading in the data memory 300, the file A written into the data memory 300 by using the technical solution provided in Embodiment 1 may be read by using a method shown in FIG. 4. The following steps are mainly included. S501: The processor 101 obtains second indication information, and sends the second indication information to the controller 1031 of the storage controller 103. In the embodiments of this application, the processor 101 may obtain address information of metadata of the file A in the data memory 300, and send the address information of the metadata of the file A in the data memory 300 to the controller 1031 by using the second indication information. S502: In the embodiments of this application, the controller 1031 may obtain the address information of the metadata of the file A in the data memory 300 based on the second address information, and control the data memory interface 1035 to read the metadata of the file A from the data memory 300.

In a possible implementation, the second indication information further includes a destination address that is of the metadata of the file A and that is in the runtime controller 200. The storage controller 103 may write the metadata of the file A into the runtime controller 200 based on the destination address that is of the metadata of the file A and that is in the runtime controller 200 through the system interface 104. Then, the processor 101 may read the metadata of the file A from the runtime memory 200 based on the destination address of the metadata of the file A in the runtime memory 200.

S503: The processor 101 determines, from the metadata of the file A, address information of a file AX in the data memory 300 and a random number Ra, and sends indication information of the file AX and indication information of the random number Ra to the controller 1031 of the storage controller 103. The indication information of the file AX includes address information of the file AX in the data memory 300. An implementation of the indication information of the random number Ra is similar to that in Embodiment 1, and details are not described again. In a possible implementation, the processor may further determine, based on the metadata of the file A, an identifier of a classkey a corresponding to the file A, further determine indication information of the classkey a based on a correspondence between the identifier of the classkey and a storage location, and send the indication information to the controller 1031.

S504: The controller 1031 obtains the file AX based on the indication information of the file AX, obtains the random number Ra based on the indication information of the random number Ra, and obtains the classkey a from the keystore 1032. In the embodiments of this application, the controller 1031 may obtain the address information of the file AX in the data memory 300 based on the indication information of the file AX, so as to control the data memory interface 1035 to read the file AX from the data memory 300 based on the address information of the file AX in the data memory 300. In a possible implementation, the controller 1031 may further receive the indication information that is of the classkey a and that is sent by the processor 101, and obtains the classkey a based on the indication information of the classkey a.

S505: The key generator 1033 calculates a file key RA t based on the random number Ra and the classkey a. S506: The file cryptography device 1034 uses the file key RA to decrypt the file AX, to obtain a decrypted file A. S507: The controller 1031 writes the decrypted file A into the runtime memory 200 through the system interface 104.

In a possible implementation, the processor 101 may further send destination address information of the file A in the runtime memory 200 to the controller 1031. The controller 1031 may write the decrypted file A into the runtime memory 200 through the system interface 104 based on the destination address information of the file A in the runtime memory 200. Then, the processor 101 may read the file A from the runtime memory 200.

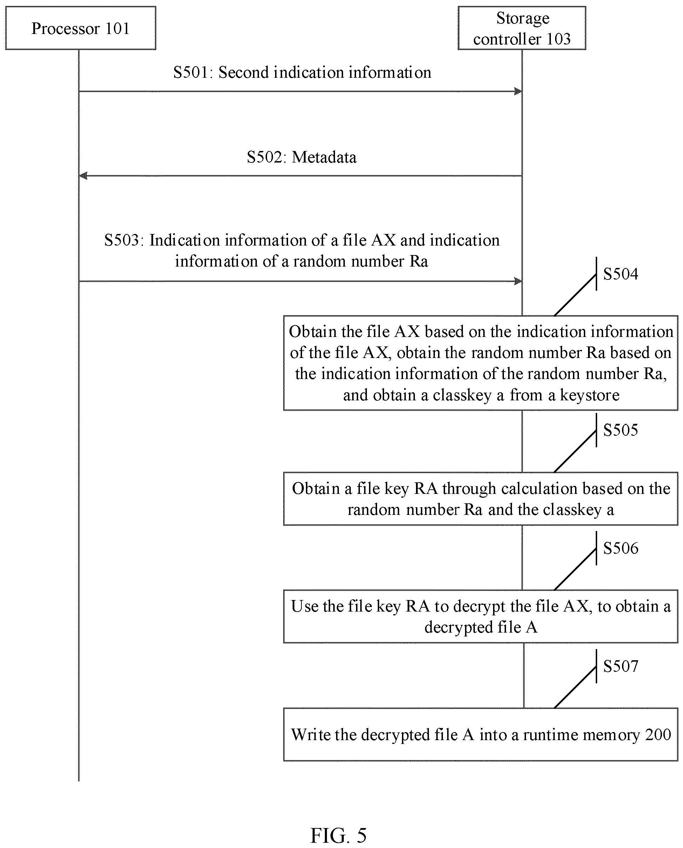

It may be understood that, when the file AX is divided into a plurality of data blocks and stored in the data memory 300, the address information of the file AX may include address information of the plurality of data blocks. The controller 1031 may control, based on the address information of the plurality of data blocks, the data memory interface 1035 to read the plurality of data blocks from the data memory 300. A subsequent process is similar to that shown in FIG. 5, and details are not described again.

In a possible implementation, the processor 101 may further send an initial vector i corresponding to the file A and index information of the initial vector i to the storage controller 103, to decrypt the file AX stored in blocks.

As shown in FIG. 4, the ciphertext [j] is any encrypted data block included in the file AX. A process in which the storage controller 103 decrypts the ciphertext [j] based on the initial vector i is similar to the foregoing process in which the storage controller 103 encrypts the plaintext [j] based on the initial vector i. A difference lies in that the file cryptography device 1034 decrypts the ciphertext [j] based on the file key RA and a processed initial vector i'. According to the AES, the file cryptography device 1034 may preliminarily decrypt the ciphertext [j] by using the AES deciphering (AES-DEC) algorithm, and then further decrypt the preliminarily decrypted ciphertext [j] based on the processed initial vector i', to obtain the plaintext [j].

### Embodiment 3

When a file that has been stored in the data memory 300 is to be stored again, for example, the file A that is read from the data memory 300 by using the technical solution provided in Embodiment 2 is to be stored again, the processor 101 may obtain metadata of the file A by using S501 and S502 in FIG. 5. Then, steps shown in S302 to S306 are performed.

It may be understood that, in S302 of Embodiment 1, the indication information of the file A may be determined based on processing logic of a file system running inside the processor 101. For example, if the file system stores the file A again in a replacement manner, the indication information of the file A may be address information of a current file A in the runtime memory 200. In S303 to S306, the storage controller 103 encrypts the file A to obtain an AX, and writes the AX into the data memory 300. If the file A is stored again in an update manner, the indication information of the file A may be address information of update data of the file A in the runtime memory 200. In S303 to S306, the storage controller 103 encrypts the update data of the file A, and writes the encrypted update data into the data memory 300.

It can be learned from the foregoing embodiments that, when the storage controller 103 provided in the embodiments of this application is used to read a file from or write a file to the data memory 300, the storage controller 103 obtains, by using the internal key generator 1033 and the keystore 1032 of the storage controller 103, a file key required for encrypting or decrypting the file. In this process, the processor 101 does not need to switch from an REE mode to a TEE mode, Therefore, resources of the processor 101 occupied by reading and writing an encrypted stored file can be reduced, thereby helping improve file processing efficiency on a premise of ensuring security.

In the foregoing embodiments, all or some functions of the processor 101 may be implemented by using software, hardware, firmware, or any combination thereof. When the software is used for implementation, all or some of the embodiments may be implemented in a form of computer program product. The computer program product includes one or more computer instructions. When the computer program instructions are loaded and executed on a computer, all or some of the procedures or the functions according to the embodiments of this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (SSD)), or the like.

The storage controller 103 in the foregoing embodiments may include at least one of a logic circuit, a transistor, an analog circuit, or an algorithm circuit, to implement a corresponding storage control function. For example, each component shown in FIG. 1 in the storage controller 103 may be a circuit module, including a circuit used to process or perform an operation, and specifically including but not limited to at least one of the logic circuit, the transistor, the analog circuit, or the algorithm circuit.

Although this application is described with reference to the embodiments, in a process of implementing the present invention that claims protection, a person skilled in the art may understand and implement another variation of the disclosed embodiments by viewing the accompanying drawings, disclosed content, and the appended claims. In the claims, "comprise" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a great effect.

Although the present invention is described with reference to specific features and the embodiments thereof, it is clear that various modifications and combinations may be made to them without departing from the scope of the present invention. Correspondingly, the specification and accompanying drawings are merely example descriptions of the present invention defined by the appended claims, and are considered as any of or all modifications, variations, combinations or equivalents that cover the scope of the present invention. It is clear that a person skilled in the art can make various modifications and variations to the present invention without departing from the scope of the present invention. The present invention is intended to cover these modifications and variations provided that these modifications and variations fall within the scope of protection defined by the following claims

## Claims

1. A storage controller, comprising: a controller (1031), a keystore (1032), a key generator (1033), a file cryptography device (1034), and a data memory interface (1035), wherein
the keystore (1032) is configured to store at least one classkey including a first classkey;
the controller (1031) is configured to: receive indication information of a to-be-processed file, indication information of a random number and indication information of the first classkey that are sent by a processor (101), wherein the processor (101) is connected to the storage controller (103) through an electrical connection, wherein the first classkey is determined based on a type of the to-be-processed file and the indication information of the first classkey is determined based on a pre-obtained correspondence between a classkey identifier and storage location information; obtain the to-be-processed file based on the indication information of the to-be-processed file; obtain the random number based on the indication information of the random number; and obtain the first classkey from the at least one classkey stored in the keystore (1032) based on the indication information of the first classkey;
the key generator (1033) is configured to calculate a file key based on the random number and the first classkey;
the file cryptography device (1034) is configured to process the to-be-processed file by using the file key to obtain a processed file; and
the data memory interface (1035) is configured to write the processed file into a data memory (300); or read the to-be-processed file from the data memory (300).

2. The storage controller according to claim 1, wherein when processing the to-be-processed file by using the file key, the file cryptography device (1034) is specifically configured to encrypt the to-be-processed file by using the file key to obtain the processed file; and
the data memory interface (1035) is specifically configured to write the processed file into the data memory (300).

3. The storage controller according to claim 2, wherein the indication information of the to-be-processed file comprises address information of the to-be-processed file in a runtime memory (200); and
when obtaining the to-be-processed file based on the indication information of the to-be-processed file, the controller (1031) is specifically configured to read the to-be-processed file from the runtime memory (200) through a system interface (104) based on the address information.

4. The storage controller according to claim 1, wherein when processing the to-be-processed file by using the file key, the file cryptography device (1034) is specifically configured to decrypt the to-be-processed file by using the file key to obtain the processed file; and
the data memory interface (1035) is specifically configured to read the to-be-processed file from the data memory (300).

5. The storage controller according to claim 4, wherein the indication information of the to-be-processed file comprises address information of the to-be-processed file in the data memory (300); and
when obtaining the to-be-processed file based on the indication information of the to-be-processed file, the controller (1031) is specifically configured to control the data memory interface (1035) to read the to-be-processed file from the data memory (300) based on the address information.

6. The storage controller according to any one of claims 1 to 5, wherein the indication information of the random number comprises the random number; and
when obtaining the random number based on the indication information of the random number, the controller (1031) is specifically configured to obtain the random number comprised in the indication information of the random number.

7. The storage controller according to any one of claims 1 to 5, wherein the indication information of the random number comprises address information of the random number in the runtime memory (200); and
when obtaining the random number based on the indication information of the random number, the controller (1031) is specifically configured to read the random number from the runtime memory (200) through the system interface (104) based on the address information.

8. The storage controller according to any one of claims 1 to 7, wherein the indication information of the random number is determined by the processor (101) based on the random number in the runtime memory (200); and
before receiving the indication information of the to-be-processed file and the indication information of the random number that are sent by the processor (101), the controller (1031) is further configured to: receive second indication information sent by the processor (101); control, based on the second indication information, the data memory interface (1035) to read metadata of the to-be-processed file from the data memory (300); and write the to-be-processed file into the runtime memory (200) through the system interface (104), wherein the metadata of the to-be-processed file comprises the random number.

9. The storage controller according to claim 2 or 3, wherein the controller (1031) is further configured to: receive first indication information sent by the processor (101); and control, based on the first indication information, the data memory interface (1035) to write the random number into the data memory (300) as metadata of the to-be-processed file.

10. The storage controller according to any one of claims 1 to 9, wherein when obtaining the first classkey from the at least one classkey stored in the keystore (1032), the controller (1031) is specifically configured to:
receive indication information of the first classkey sent by the processor (101), wherein the indication information of the first classkey is used to indicate a storage location of the first classkey in the keystore (1032); and
obtain the first classkey from the keystore (1032) based on the indication information of the first classkey.

11. A file processing method, comprising:
determining, by a processor (101), a first classkey based on a type of a to-be-processed file;
determining, by the processor (101), indication information of the first classkey based on a pre-obtained correspondence between a classkey identifier and storage location information;
receiving, by a storage controller (103), indication information of the to-be-processed file, indication information of a random number and indication information of the first classkey that are sent by the processor (101), wherein the processor (101) is connected to the storage controller (103) through an electrical connection;
obtaining, by the storage controller (103), the to-be-processed file based on the indication information of the to-be-processed file, obtaining the random number based on the indication information of the random number, and obtaining the first classkey from at least one pre-stored classkey based on the indication information of the first classkey;
calculating, by the storage controller (103), a file key based on the random number and the first classkey; and
processing, by the storage controller (103), the to-be-processed file by using the file key to obtain a processed file.

12. A file processing apparatus, comprising a processor (101) and the storage controller (103) according to any one of claims 1 to 10, wherein
the processor (101) is configured to send indication information of a to-be-processed file and indication information of a random number to the storage controller (103).

13. The apparatus according to claim 12, wherein before sending the indication information of the to-be-processed file and the indication information of the random number to the storage controller (103), the processor (101) is further configured to generate the random number for the to-be-processed file; and
after generating the random number for the to-be-processed file, the processor (101) is further configured to send first indication information to the storage controller (103), wherein the first indication information is used to indicate the storage controller (103) to write the random number into a data memory (300) as metadata of the to-be-processed file.

14. The apparatus according to claim 12, wherein before sending the indication information of the to-be-processed file and the indication information of the random number to the storage controller (103), the processor (101) is further configured to: send second indication information to the storage controller (103), wherein the second indication information is used to indicate the storage controller (103) to write metadata of the to-be-processed file into a runtime memory (200); query the runtime memory (200); and determine the random number from the metadata of the to-be-processed file.

15. The apparatus according to claim 12, further comprising a memory controller (102) corresponding to a runtime memory (200), wherein the memory controller (102) is connected to the storage controller (103) through a system interface (104), wherein
the memory controller (102) is configured to: read the to-be-processed file from the runtime memory (200), and send the to-be-processed file to the storage controller (103) through the system interface (104); or
receive a processed file from the storage controller (103) through the system interface (104), and write the processed file into the runtime memory (200).

## Patentansprüche

1. Speichersteuerung, umfassend: eine Steuerung (1031), einen Schlüsselspeicher (1032), einen Schlüsselgenerator (1033), eine Datei-Kryptographie-Vorrichtung (1034) und eine Datenarbeitsspeicherschnittstelle (1035), wobei
der Schlüsselspeicher (1032) dazu konfiguriert ist, mindestens einen Klassenschlüssel, der einen ersten Klassenschlüssel beinhaltet, zu speichern;
die Steuerung (1031) dazu konfiguriert ist: Anzeigeinformationen einer zu verarbeitenden Datei, Anzeigeinformationen einer Zufallszahl und Anzeigeinformationen des ersten Klassenschlüssels zu empfangen, die durch einen Prozessor (101) gesendet werden, wobei der Prozessor (101) über eine elektrische Verbindung mit der Speichersteuerung (103) verbunden ist, wobei der erste Klassenschlüssel basierend auf einem Typ der zu verarbeitenden Datei bestimmt wird und die Anzeigeinformationen des ersten Klassenschlüssels basierend auf einer vorab erlangten Entsprechung zwischen einer Klassenschlüsselkennung und Speicherortinformationen bestimmt werden; die zu verarbeitende Datei basierend auf den Anzeigeinformationen der zu verarbeitenden Datei zu erlangen; die Zufallszahl basierend auf den Anzeigeinformationen der Zufallszahl zu erlangen; und den ersten Klassenschlüssel aus dem mindestens einen in dem Schlüsselspeicher (1032) gespeicherten Klassenschlüssel basierend auf den Anzeigeinformationen des ersten Klassenschlüssels zu erlangen;
der Schlüsselgenerator (1033) dazu konfiguriert ist, einen Dateischlüssel basierend auf der Zufallszahl und dem ersten Klassenschlüssel zu berechnen;
die Datei-Kryptographie-Vorrichtung (1034) dazu konfiguriert ist, die zu verarbeitende Datei unter Verwendung des Dateischlüssels zu verarbeiten, um eine verarbeitete Datei zu erlangen; und
die Datenarbeitsspeicherschnittstelle (1035) dazu konfiguriert ist, die verarbeitete Datei in einen Datenarbeitsspeicher (300) zu schreiben; oder die zu verarbeitende Datei aus dem Datenarbeitsspeicher (300) zu lesen.

2. Speichersteuerung nach Anspruch 1, wobei die Datei-Kryptographie-Vorrichtung (1034) bei der Verarbeitung der zu verarbeitenden Datei unter Verwendung des Dateischlüssels speziell dazu konfiguriert ist, die zu verarbeitende Datei unter Verwendung des Dateischlüssels zu verschlüsseln, um die verarbeitete Datei zu erlangen; und
die Datenarbeitsspeicherschnittstelle (1035) speziell dazu konfiguriert ist, die verarbeitete Datei in den Datenarbeitsspeicher (300) zu schreiben.

3. Speichersteuerung nach Anspruch 2, wobei die Anzeigeinformationen der zu verarbeitenden Datei Adressinformationen der zu verarbeitenden Datei in einem Laufzeitarbeitsspeicher (200) umfassen; und
die Steuerung (1031) beim Erlangen der zu verarbeitenden Datei basierend auf den Anzeigeinformationen der zu verarbeitenden Datei speziell dazu konfiguriert ist, die zu verarbeitende Datei basierend auf den Adressinformationen über eine Systemschnittstelle (104) aus dem Laufzeitarbeitsspeicher (200) zu lesen.

4. Speichersteuerung nach Anspruch 1, wobei die Datei-Kryptographie-Vorrichtung (1034) bei der Verarbeitung der zu verarbeitenden Datei unter Verwendung des Dateischlüssels speziell dazu konfiguriert ist, die zu verarbeitende Datei unter Verwendung des Dateischlüssels zu entschlüsseln, um die verarbeitete Datei zu erlangen; und
die Datenarbeitsspeicherschnittstelle (1035) speziell dazu konfiguriert ist, die zu verarbeitende Datei aus dem Datenarbeitsspeicher (300) zu lesen.

5. Speichersteuerung nach Anspruch 4, wobei die Anzeigeinformationen der zu verarbeitenden Datei Adressinformationen der zu verarbeitenden Datei in dem Datenarbeitsspeicher (300) umfassen; und
die Steuerung (1031) beim Erlangen der zu verarbeitenden Datei basierend auf den Anzeigeinformationen der zu verarbeitenden Datei speziell dazu konfiguriert ist, die Datenarbeitsspeicherschnittstelle (1035) zu steuern, um die zu verarbeitende Datei basierend auf den Adressinformationen aus dem Datenarbeitsspeicher (300) zu lesen.

6. Speichersteuerung nach einem der Ansprüche 1 bis 5, wobei die Anzeigeinformationen der Zufallszahl die Zufallszahl umfassen, und die Steuerung (1031) beim Erlangen der Zufallszahl basierend auf den Anzeigeinformationen der Zufallszahl speziell dazu konfiguriert ist, die in den Anzeigeinformationen der Zufallszahl enthaltene Zufallszahl zu erlangen.

7. Speichersteuerung nach einem der Ansprüche 1 bis 5, wobei die Anzeigeinformationen der Zufallszahl Adressinformationen der Zufallszahl in dem Laufzeitarbeitsspeicher (200) umfassen; und die Steuerung (1031) beim Erlangen der Zufallszahl basierend auf den Anzeigeinformationen der Zufallszahl speziell dazu konfiguriert ist, die Zufallszahl basierend auf den Adressinformationen über die Systemschnittstelle (104) aus dem Laufzeitarbeitsspeicher (200) zu lesen.

8. Speichersteuerung nach einem der Ansprüche 1 bis 7, wobei die Anzeigeinformationen der Zufallszahl durch den Prozessor (101) basierend auf der Zufallszahl in dem Laufzeitarbeitsspeicher (200) bestimmt werden; und
die Steuerung (1031) vor dem Empfangen der Anzeigeinformationen der zu verarbeitenden Datei und der Anzeigeinformationen der Zufallszahl, die durch den Prozessor (101) gesendet werden, ferner dazu konfiguriert ist: zweite Anzeigeinformationen zu empfangen, die durch den Prozessor (101) gesendet werden; basierend auf den zweiten Anzeigeinformationen die Datenarbeitsspeicherschnittstelle (1035) zu steuern, um Metadaten der zu verarbeitenden Datei aus dem Datenarbeitsspeicher (300) zu lesen; und die zu verarbeitende Datei über die Systemschnittstelle (104) in den Laufzeitarbeitsspeicher (200) zu schreiben, wobei die Metadaten der zu verarbeitenden Datei die Zufallszahl umfassen.

9. Speichersteuerung nach Anspruch 2 oder 3, wobei die Steuerung (1031) ferner dazu konfiguriert ist: durch den Prozessor (101) gesendete erste Anzeigeinformationen zu empfangen; und basierend auf den ersten Anzeigeinformationen die Datenarbeitsspeicherschnittstelle (1035) zu steuern, um die Zufallszahl als Metadaten der zu verarbeitenden Datei in den Datenarbeitsspeicher (300) zu schreiben.

10. Speichersteuerung nach einem der Ansprüche 1 bis 9, wobei die Steuerung (1031) beim Erlangen des ersten Klassenschlüssels aus dem mindestens einen Klassenschlüssel, der in dem Schlüsselspeicher (1032) gespeichert ist, speziell dazu konfiguriert ist:
Anzeigeinformationen des ersten Klassenschlüssels, die durch den Prozessor (101) gesendet wurden, zu empfangen, wobei die Anzeigeinformationen des ersten Klassenschlüssels verwendet werden, um einen Speicherort des ersten Klassenschlüssels in dem Schlüsselspeicher (1032) anzuzeigen; und
den ersten Klassenschlüssel aus dem Schlüsselspeicher (1032) basierend auf den Anzeigeinformationen des ersten Klassenschlüssels zu erlangen.

11. Dateiverarbeitungsverfahren, umfassend:
Bestimmen eines ersten Klassenschlüssels basierend auf einem Typ einer zu verarbeitenden Datei durch einen Prozessor (101);
Bestimmen von Anzeigeinformationen des ersten Klassenschlüssels basierend auf einer vorab erlangten Entsprechung zwischen einer Klassenschlüsselkennung und Speicherortinformationen durch den Prozessor (101);
Empfangen von Anzeigeinformationen der zu verarbeitenden Datei, Anzeigeinformationen einer Zufallszahl und Anzeigeinformationen des ersten Klassenschlüssels, die durch den Prozessor (101) gesendet werden, durch eine Speichersteuerung (103), wobei der Prozessor (101) über eine elektrische Verbindung mit der Speichersteuerung (103) verbunden ist;
Erlangen der zu verarbeitenden Datei basierend auf den Anzeigeinformationen der zu verarbeitenden Datei durch die Speichersteuerung (103), Erlangen der Zufallszahl basierend auf den Anzeigeinformationen der Zufallszahl und Erlangen des ersten Klassenschlüssels von mindestens einem vorab gespeicherten Klassenschlüssel basierend auf den Anzeigeinformationen des ersten Klassenschlüssels;
Berechnen eines Dateischlüssels basierend auf der Zufallszahl und dem ersten Klassenschlüssel durch die Speichersteuerung (103); und
Verarbeiten der zu verarbeitenden Datei unter Verwendung des Dateischlüssels, um eine verarbeitete Datei zu erlangen, durch die Speichersteuerung (103).

12. Dateiverarbeitungseinrichtung, umfassend einen Prozessor (101) und die Speichersteuerung (103) nach einem der Ansprüche 1 bis 10, wobei
der Prozessor (101) dazu konfiguriert ist, Anzeigeinformationen einer zu verarbeitenden Datei und Anzeigeinformationen einer Zufallszahl an die Speichersteuerung (103) zu senden.

13. Einrichtung nach Anspruch 12, wobei der Prozessor (101) vor dem Senden der Anzeigeinformationen der zu verarbeitenden Datei und der Anzeigeinformationen der Zufallszahl an die Speichersteuerung (103) ferner dazu konfiguriert ist, die Zufallszahl für die zu verarbeitende Datei zu generieren; und
der Prozessor (101) nach dem Generieren der Zufallszahl für die zu verarbeitende Datei ferner dazu konfiguriert ist, erste Anzeigeinformationen an die Speichersteuerung (103) zu senden, wobei die ersten Anzeigeinformationen verwendet werden, der Speichersteuerung (103) anzuzeigen, die Zufallszahl als Metadaten der zu verarbeitenden Datei in einen Datenarbeitsspeicher (300) zu schreiben.

14. Einrichtung nach Anspruch 12, wobei der Prozessor (101) vor dem Senden der Anzeigeinformationen der zu verarbeitenden Datei und der Anzeigeinformationen der Zufallszahl an die Speichersteuerung (103) ferner dazu konfiguriert ist: zweite Anzeigeinformationen an die Speichersteuerung (103) zu senden, wobei die zweiten Anzeigeinformationen verwendet werden, um der Speichersteuerung (103) anzuzeigen, Metadaten der zu verarbeitenden Datei in einen Laufzeitarbeitsspeicher (200) zu schreiben; den Laufzeitarbeitsspeicher (200) aufzurufen; und die Zufallszahl aus den Metadaten der zu verarbeitenden Datei zu bestimmen.

15. Einrichtung nach Anspruch 12, ferner umfassend eine Arbeitsspeichersteuerung (102) entsprechend einem Laufzeitarbeitsspeicher (200), wobei die Arbeitsspeichersteuerung (102) über eine Systemschnittstelle (104) mit der Speichersteuerung (103) verbunden ist, wobei
die Arbeitsspeichersteuerung (102) dazu konfiguriert ist: die zu verarbeitende Datei aus dem Laufzeitarbeitsspeicher (200) zu lesen und die zu verarbeitende Datei über die Systemschnittstelle (104) an die Speichersteuerung (103) zu senden; oder
eine verarbeitete Datei von der Speichersteuerung (103) über die Systemschnittstelle (104) zu empfangen und die verarbeitete Datei in den Laufzeitarbeitsspeicher (200) zu schreiben.

## Revendications

1. Contrôleur de stockage, comprenant : un dispositif de commande (1031), un magasin de clés (1032), un générateur de clés (1033), un dispositif de cryptographie de fichiers (1034) et une interface de mémoire de données (1035), dans lequel
le magasin de clés (1032) est configuré pour stocker au moins une clé de classe comportant une première clé de classe ;
le dispositif de commande (1031) est configuré pour : recevoir des informations d'indication d'un fichier à traiter, des informations d'indication d'un nombre aléatoire et des informations d'indication de la première clé de classe qui sont envoyées par un processeur (101), dans lequel le processeur (101) est connecté au contrôleur de stockage (103) par l'intermédiaire d'une connexion électrique, dans lequel la première clé de classe est déterminée sur la base d'un type de fichier à traiter et les informations d'indication de la première clé de classe sont déterminées sur la base d'une correspondance pré-obtenue entre un identifiant de clé de classe et des informations d'emplacement de stockage ; obtenir le fichier à traiter sur la base des informations d'indication du fichier à traiter ; obtenir le nombre aléatoire sur la base des informations d'indication du nombre aléatoire ; et obtenir la première clé de classe à partir de l'au moins une clé de classe stockée dans le magasin de clés (1032) sur la base des informations d'indication de la première clé de classe ;
le générateur de clé (1033) est configuré pour calculer une clé de fichier sur la base du nombre aléatoire et de la première clé de classe ;
le dispositif de cryptographie de fichier (1034) est configuré pour traiter le fichier à traiter à l'aide de la clé de fichier pour obtenir un fichier traité ; et
l'interface de mémoire de données (1035) est configurée pour écrire le fichier traité dans une mémoire de données (300) ; ou lire le fichier à traiter à partir de la mémoire de données (300) .

2. Contrôleur de stockage selon la revendication 1, dans lequel, lors du traitement du fichier à traiter à l'aide de la clé de fichier, le dispositif de cryptographie de fichier (1034) est spécifiquement configuré pour crypter le fichier à traiter à l'aide de la clé de fichier pour obtenir le fichier traité ; et
l'interface de mémoire de données (1035) est spécifiquement configurée pour écrire le fichier traité dans la mémoire de données (300).

3. Contrôleur de stockage selon la revendication 2, dans lequel les informations d'indication du fichier à traiter comprennent des informations d'adresse du fichier à traiter dans une mémoire d'exécution (200) ; et
lors de l'obtention du fichier à traiter sur la base des informations d'indication du fichier à traiter, le dispositif de commande (1031) est spécifiquement configuré pour lire le fichier à traiter à partir de la mémoire d'exécution (200) par l'intermédiaire d'une interface système (104) sur la base des informations d'adresse.

4. Contrôleur de stockage selon la revendication 1, dans lequel, lors du traitement du fichier à traiter à l'aide de la clé de fichier, le dispositif de cryptographie de fichier (1034) est spécifiquement configuré pour décrypter le fichier à traiter à l'aide de la clé de fichier pour obtenir le fichier traité ; et
l'interface de mémoire de données (1035) est spécifiquement configurée pour lire le fichier à traiter à partir de la mémoire de données (300).

5. Contrôleur de stockage selon la revendication 4, dans lequel les informations d'indication du fichier à traiter comprennent des informations d'adresse du fichier à traiter dans la mémoire de données (300) ; et
lors de l'obtention du fichier à traiter sur la base des informations d'indication du fichier à traiter, le dispositif de commande (1031) est spécifiquement configuré pour commander l'interface de mémoire de données (1035) pour lire le fichier à traiter à partir de la mémoire de données (300) sur la base des informations d'adresse.

6. Contrôleur de stockage selon l'une quelconque des revendications 1 à 5, dans lequel les informations d'indication du nombre aléatoire comprennent le nombre aléatoire, et
lors de l'obtention du nombre aléatoire sur la base des informations d'indication du nombre aléatoire, le dispositif de commande (1031) est spécifiquement configuré pour obtenir le nombre aléatoire compris dans les informations d'indication du nombre aléatoire.

7. Contrôleur de stockage selon l'une quelconque des revendications 1 à 5, dans lequel les informations d'indication du nombre aléatoire comprennent des informations d'adresse du nombre aléatoire dans la mémoire d'exécution (200) ; et
lors de l'obtention du nombre aléatoire sur la base des informations d'indication du nombre aléatoire, le dispositif de commande (1031) est spécifiquement configuré pour lire le nombre aléatoire à partir de la mémoire d'exécution (200) par l'intermédiaire de l'interface système (104) sur la base des informations d'adresse.

8. Contrôleur de stockage selon l'une quelconque des revendications 1 à 7, dans lequel les informations d'indication du nombre aléatoire sont déterminées par le processeur (101) sur la base du nombre aléatoire dans la mémoire d'exécution (200) ; et
avant de recevoir les informations d'indication du fichier à traiter et les informations d'indication du nombre aléatoire qui sont envoyées par le processeur (101), le dispositif de commande (1031) est également configuré pour : recevoir des secondes informations d'indication envoyées par le processeur (101) ; commander, sur la base des secondes informations d'indication, l'interface de mémoire de données (1035) pour lire les métadonnées du fichier à traiter à partir de la mémoire de données (300) ; et écrire le fichier à traiter dans la mémoire d'exécution (200) par l'intermédiaire de l'interface système (104), dans lequel les métadonnées du fichier à traiter comprennent le nombre aléatoire.

9. Contrôleur de stockage selon la revendication 2 ou 3, dans lequel le dispositif de commande (1031) est également configuré pour : recevoir des premières informations d'indication envoyées par le processeur (101) ; et commander, sur la base des premières informations d'indication, l'interface de mémoire de données (1035) pour écrire le nombre aléatoire dans la mémoire de données (300) en tant que métadonnées du fichier à traiter.

10. Contrôleur de stockage selon l'une quelconque des revendications 1 à 9, dans lequel, lors de l'obtention de la première clé de classe à partir de l'au moins une clé de classe stockée dans le magasin de clés (1032), le dispositif de commande (1031) est spécifiquement configuré pour :
recevoir des informations d'indication de la première clé de classe envoyées par le processeur (101), dans lequel les informations d'indication de la première clé de classe sont utilisées pour indiquer un emplacement de stockage de la première clé de classe dans le magasin de clés (1032) ; et
obtenir la première clé de classe à partir du magasin de clés (1032) sur la base des informations d'indication de la première clé de classe.

11. Procédé de traitement de fichiers, comprenant :
la détermination, par un processeur (101), d'une première clé de classe basée sur un type d'un fichier à traiter ;
la détermination, par le processeur (101), des informations d'indication de la première clé de classe sur la base d'une correspondance pré-obtenue entre un identifiant de clé de classe et des informations d'emplacement de stockage ;
la réception, par un contrôleur de stockage (103), des informations d'indication du fichier à traiter, des informations d'indication d'un nombre aléatoire et des informations d'indication de la première clé de classe qui sont envoyées par le processeur (101), dans lequel le processeur (101) est connecté au contrôleur de stockage (103) par l'intermédiaire d'une connexion électrique ;
l'obtention, par le contrôleur de stockage (103), du fichier à traiter sur la base des informations d'indication du fichier à traiter, l'obtention du nombre aléatoire sur la base des informations d'indication du nombre aléatoire, et l'obtention de la première clé de classe à partir d'au moins une clé de classe pré-stockée sur la base des informations d'indication de la première clé de classe ;
le calcul, par le contrôleur de stockage (103), d'une clé de fichier basée sur le nombre aléatoire et la première clé de classe ; et
le traitement, par le contrôleur de stockage (103), du fichier à traiter à l'aide de la clé de fichier pour obtenir un fichier traité.

12. Appareil de traitement de fichiers, comprenant un processeur (101) et le contrôleur de stockage (103) selon l'une quelconque des revendications 1 à 10, dans lequel
le processeur (101) est configuré pour envoyer des informations d'indication d'un fichier à traiter et des informations d'indication d'un nombre aléatoire au contrôleur de stockage (103).

13. Appareil selon la revendication 12, dans lequel, avant d'envoyer les informations d'indication du fichier à traiter et les informations d'indication du nombre aléatoire au contrôleur de stockage (103), le processeur (101) est également configuré pour générer le nombre aléatoire pour le fichier à traiter ; et
après avoir généré le nombre aléatoire pour le fichier à traiter, le processeur (101) est également configuré pour envoyer des premières informations d'indication au contrôleur de stockage (103), dans lequel les premières informations d'indication sont utilisées pour indiquer au contrôleur de stockage (103) d'écrire le nombre aléatoire dans une mémoire de données (300) en tant que métadonnées du fichier à traiter.

14. Appareil selon la revendication 12, dans lequel avant d'envoyer les informations d'indication du fichier à traiter et les informations d'indication du nombre aléatoire au contrôleur de stockage (103), le processeur (101) est également configuré pour : envoyer des secondes informations d'indication au contrôleur de stockage (103), dans lequel les secondes informations d'indication sont utilisées pour indiquer au contrôleur de stockage (103) d'écrire des métadonnées du fichier à traiter dans une mémoire d'exécution (200) ; interroger la mémoire d'exécution (200) ; et déterminer le nombre aléatoire à partir des métadonnées du fichier à traiter.

15. Appareil selon la revendication 12, comprenant également un contrôleur de mémoire (102) correspondant à une mémoire d'exécution (200), dans lequel le contrôleur de mémoire (102) est connecté au contrôleur de stockage (103) par l'intermédiaire d'une interface système (104), dans lequel
le contrôleur de mémoire (102) est configuré pour : lire le fichier à traiter à partir de la mémoire d'exécution (200), et envoyer le fichier à traiter au contrôleur de stockage (103) par l'intermédiaire de l'interface système (104) ; ou
recevoir un fichier traité du contrôleur de stockage (103) par l'intermédiaire de l'interface système (104) et écrire le fichier traité dans la mémoire d'exécution (200).
